# DEMANDE DE BREVET EUROPEEN

(11) **EP 0 559 551 A1**
(43) Date de publication de la demande: **08.09.1993**
(21) Numéro de dépôt: 93400531.5
(22) Date de dépôt: 02.03.1993
(51) Int. Cl.: G02B 6/42, G02B 6/28

(54) **Coupleur optique à haute isolation**

(30) Priorité: 06.03.1992 FR 9202722
(71) Demandeur: THOMSON HYBRIDES, F-92800 Puteaux (FR)
(72) Inventeur: Avelange, Gérome, F-92402 Courbevoie Cedex (FR); Lamache, Philippe, F-92402 Courbevoie Cedex (FR)
(74) Mandataire: Guérin, Michel

(57) **Abrégé**

Un coupleur optique comprend au moins une fibre optique (1), un laser (2), une photodiode (3), une lentille de focalisation (30) sur la fibre, et une lame (4) qui réfléchit vers la photodiode (3) les rayons provenant de la fibre (1).

Dans le but d'éviter qu'un rayon émis par le laser (2) ne revienne sur la photodiode (3) après réflexion sur le dioptre (4) d'entrée de la lentille (30), l'axe optique est brisé à hauteur de ce dioptre (4) au moyen d'un prisme (5). Les rayons réfléchis ne reviennent plus sur la lame (41).

Application aux télécommunications.

## Description

La présente invention concerne une tête optique intégrable du type coupleur optique fonctionnant en émission et en réception d'une même longueur d'onde lumineuse, transmise par une fibre optique. Conçu pour être directement intégrable sur le substrat d'un circuit hybride, ce coupleur optique est remarquable par l'isolation élevée entre ses deux voies.

Dans le schéma de base d'un système d'échange de données par fibre optique, une unique fibre optique met en relation deux ensembles diode laser plus photodiode, situés chacun à une extrêmité de la fibre optique : dans un premier sens d'échange, les informations émises sous forme d'impulsions lumineuses par un laser à une première extrémité sont détectées par une photodiode à une deuxième extrêmité, et réciproquement dans un second sens d'échange. Les lasers peuvent aussi être remplacés par des diodes électroluminescentes ou DEL (LED en anglais).

Puisqu'il n'y a qu'une seule fibre optique pour deux voies de communication, il faut disposer aux extrêmités de la fibre deux systèmes dénommés coupleurs puisqu'ils couplent le laser et la photodiode à la fibre.

De nombreux types de coupleurs sont connus, basés sur différents principes, mais il est apparu intéressant de les rendre intégrables sur le substrat d'un circuit hybride. La demande de brevet français n° 89 15239 du 21 novembre 1989, déposée par la Demanderesse, décrit une tête optique à deux dimensions - dans le plan d'un circuit hybride d'accueil - si l'on considère comme négligeable l'épaisseur des puces semiconductrices, des lentilles, de la fibre optique, qui de toutes façons est du même ordre de grandeur que l'épaisseur des composants fixés sur le circuit hybride.

Un inconvénient des coupleurs optiques est lié à la très forte différence entre le niveau de l'énergie lumineuse émise par le laser et le niveau de l'énergie reçue par la photodiode. En règle générale, dans les télécommunications, la distance entre deux coupleurs est comprise entre 1 et 25 kilomètres, ce qui atténue considérablement l'énergie lumineuse émise par un laser, absorbée dans le coeur de la fibre optique. Et même si le système d'échange de données est utilisé avec une faible longueur de fibre optique, il n'en reste pas moins que, en vertu de la réversibilité des trajets optiques, un rayon lumineux émis par le laser d'un coupleur peut se réfléchir, partiellement, sur l'un des nombreux dioptres du coupleur et revenir sur la photodiode de détection de ce même coupleur. Il y a donc une mauvaise isolation des voies, l'équivalent de la diaphonie en téléphonie, et un coupleur détecte en parasite une partie des signaux qu'il émet lui-même .

L'objet de l'invention est donc un dispositif optoélectronique, de type tête ou coupleur optique, comprenant un composant émetteur de lumière et un composant récepteur de lumière, ce dispositif ayant une structure et une organisation telles que les rayons lumineux parasites qui se réfléchissent sur les différents dioptres existant dans le dispositif n'empruntent pas le même trajet optique que les rayons incidents, conduisant ainsi à une isolation élevée entre les voies d'émission et de réception. Selon cette structure, le composant détecteur n'est plus soumis à un éblouissement parasite de la part du composant émetteur dont il est voisin dans un même coupleur.

De façon plus précise, l'invention concerne un coupleur optique à haute isolation, comportant un dispositif émetteur d'un rayonnement lumineux focalisé par une lentille sur une fibre optique, et un dispositif récepteur d'un rayonnement lumineux transmis par la dite fibre optique, et réfléchi vers le dispositif récepteur par une lame séparatrice, ce coupleur optique étant caractérisé en ce qu'il comporte des moyens de déviation des rayons lumineux, de sorte que l'axe optique du dispositif émetteur est dévié par rapport à l'axe optique de la fibre optique et de la lentille de focalisation.

L'invention sera mieux comprise par la description plus détaillée qui suit maintenant d'un exemple d'application, en liaison avec les figures jointes en annexe, qui représentent. :
- la figure 1 : vue en plan d'un coupleur optoélectronique selon l'art connu,
- figure 2 : schéma optique d'un coupleur optoélectronique selon l'invention .

Les particularités de l'invention ressortiront plus facilement après le rappel des causes d'une isolation insuffisante, en s'appuyant sur un exemple de l'art connu.

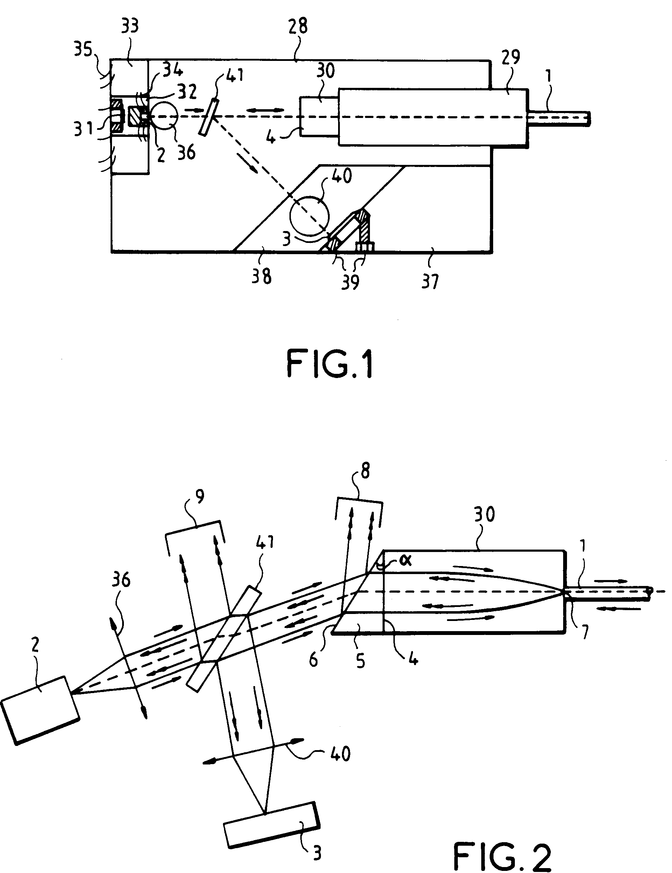

La figure 1 représente le schéma d'implantation d'un coupleur optique décrit dans la demande de brevet précédemment citée, et les mêmes indices de repères ont été conservés.

Tous les composants de ce coupleur sont fixés sur un substrat 28 qui sert de plan de référence. Sur ce plan 28 est fixé un tube 29 ; il est préférablement métallique, a une longueur de l'ordre de 1 à 2 cm, et un diamètre intérieur qui lui permet de recevoir d'un côté la fibre optique 1 et, de l'autre côté, une optique de focalisation 30, telle qu'une lentille ordinaire ou une lentille à variation d'indice.

Dans l'axe optique de la fibre 1, se trouve un premier ensemble optoélectronique émetteur : un laser 2. Celui-ci, et sa photodiode 31 de contre réaction, sont fixés sur une plaquette isolante 32, munie des métallisations adéquates pour la fixation et l'alimentation électrique, elle même fixée sur une première embase 33, généralement métallique. La hauteur totale de l'isolant 32 et de l'embase 33 est telle que l'axe optique du laser 2 soit très sensiblement confondu avec l'axe optique de la fibre 1. Des fils d'or ou d'aluminium 34 et 35 assurent les polarisations électriques du laser 2 et de la diode 31, en interconnexion avec un circuit hybride extérieur.

Afin de focaliser sur la fibre optique 1 la lumière émise par le laser 2, une première lentille 36 est positionnée entre le laser et la lentille 30. La lentille 36 est constituée par une bille sphérique de verre ou de saphir, et son diamètre de 1, 5 mm environ correspond à un bon alignement optique laser 2 - fibre 1, lorsque la bille 36 est collée directement sur le substrat 28, qui sert de plan de référence.

Un second ensemble optoélectronique tel qu 'une photodiode 3 de détection est positionné latéralement par rapport au tube 29 et à la fibre optique 1. De façon comparable au laser 2, la photodiode 3 est fixée sur un support isolant 37, muni de métallisations adéquates pour la polarisation, ce support étant lui même fixé sur une deuxième embase métallique 38. Des fils d'or ou d'aluminium 39 amènent la polarisation de la photodiode, en liaison avec le circuit hybride extérieur. Une deuxième lentille sphérique 40, en verre ou en saphir, d'un diamètre de l'ordre de 2 mm, est collée sur l'embase métallique 38, en face de la photodiode 3.

Le faisceau lumineux émis par le laser 2 est directement focalisé par les lentilles 36 et 30 sur la fibre optique 1. Mais le faisceau lumineux transmis par la fibre optique -provenant d'une source optique située à l'autre extrêmité de la fibre optique - doit être dévié pour atteindre la photodiode 3. Pour atteindre ce but, une lame 41 formant miroir sans tain est placée sur l'axe optique de la fibre 1, entre les lentilles 30 et 36.

Il est remarquable que le laser 2 émet un faisceau optique dans l'axe de la fibre optique 1, conformément à la propagation rectiligne de la lumière. Ceci entraîne comme conséquence que ce faisceau lumineux tombe perpendiculairement sur le dioptre optique 4 formé par la surface d'entrée de la lentille 30 et l'air ambiant. En raison de la forte différence d'indice entre l'air et le verre de la lentille, une forte proportion du faisceau lumineux est réfléchie perpendiculairement par ce dioptre, et ce rayonnement réfléchi selon le même trajet que le faisceau incident rencontre alors la lame 41. Une partie du rayonnement réfléchi traverse la lame 41 et tombe sur le laser 2, sans autre conséquence. Mais une autre partie du rayonnement est réfléchi une seconde fois par la lame 41 et tombe sur la photodiode 3 : ce coupleur détecte donc de façon parasite les signaux qu'il émet lui-même, en plus des signaux qu'il reçoit normalement par la fibre optique 1.

Il s'agit là de la principale cause de mauvaise isolation, car le même mécanisme s'applique au second dioptre formé par la lentille 30 et la fibre 1. En outre, une partie du faisceau émis par le laser 2 peut diffuser, à la sortie de la lame 41, et atteindre directement la photodiode 3.

L'invention apporte une solution à ce problème d'isolation optique en modifiant la structure du coupleur, de telle sorte que l'axe optique de la fibre 1 ne soit plus confondu avec l'axe optique du faisceau émis par le laser : la cassure entre ces deux axes optiques a lieu entre la lame séparatrice 41 et la lentille 30. Ainsi un rayon lumineux émis par le laser tombe sur le système de focalisation sous un angle différent de 90°, et la partie réfléchie ne suit plus le même trajet que le rayon incident, donc elle ne vient plus frapper la photodiode 3, dans la mesure où elle ne revient plus sur la lame séparatrice 41.

La figure 2 donne le schéma optique d'un coupleur selon l'invention : seuls ont été représentés les objets nécessaires à la compréhension et ceux-ci ont reçu les mêmes indices de repère que ceux de la figure 1 lorsqu'ils sont communs.

La comparaison avec la figure 1 met en évidence la présence d'un prisme 5 qui est collé sur le dioptre 4 de la lentille à gradient d'indice 30, c'est à dire sur la face de cette lentille opposée à la face sur laquelle est collée la fibre optique 1.

Ce prisme 5 est taillé dans un verre ou tout autre matériau transparent dont l'indice de réfraction "n" est le même que celui du coeur de la lentille 30.

Ainsi, le dioptre 4 ne dévie ni ne réfléchit les rayons lumineux puisque l'indice est le même des deux côtés du dipotre, du moins à proximité de l'axe optique commun à la fibre 1 et à la lentille 30. L'angle au sommet "α" du prisme 5 est de l'ordre de 10 à 20°, et le prisme est disposé de façon qu'il dévie les rayons lumineux dans le plan formé par la fibre optique, l'axe du laser et l'axe de la photodiode, tel que représenté en figure 2.

Le prisme est accolé à la lentille 30 au moyen d'un liquide d'indice, du genre baume du Canada, au niveau du dioptre 4, ce qui entraine que les réflexions à cet interface sont quasiment nulles.

Il en est de même pour le dioptre 7 formé entre la fibre optique 1 et la lentille 30 à gradient d'indice : ce dioptre est mouillé par un liquide qui supprime les réflexions parasites.

Pour un signal optique (représenté par une flêche double) qui parvient au coupleur par la fibre optique 1, il n'y a quasiment pas de réflexion parasite sur les dioptres 7 et 4. Les rayons lumineux traversent le prisme et sont déviés à sa sortie par le dioptre 6 formé par le prisme et l'air : c'est à ce niveau qu'à lieu la cassure de l'axe optique. Après réflexion sur la lame séparatrice 41, les rayons incidents de ce signal sont collimatés par la lentille 40 et tombent sur la photodiode 3, qui les transforme en signaux électriques transmis pour exploitation.

Eventuellement, et selon la nature de la lame séparatrice 41, une partie du signal incident peut diffracter à travers la lame 41 et tomber sur le laser 2. Cela n'a pas d'autre incidence que de constituer une perte, qui diminue le rendement du coupleur.

Un signal optique (représenté par une flêche simple) émis par le laser 2 est collimaté par la lentille 36, légèrement décalé par le double dioptre de la lame 41, puis vient tomber sur le dioptre 6 qui constitue alors la face d'entrée du prisme 5. Par construction, le faisceau lumineux émis par le laser 2 frappe le dioptre 6 du prisme sous un angle différent de 90°, et la majeure partie du faisceau est diffractée selon les lois de l'optique, puis collimatée par la lentille 30 sur l'extrêmité de la fibre optique 1, qui transmet ce signal optique. L'interface prisme/lentille, au niveau du dioptre 4, n'amène aucune réfraction ni réflexion puisque !es indices de réfraction sont les mêmes.

Par contre, au niveau du dioptre d'entrée 6, une partie (représentée par des flêches triples) du signal optique émis par le laser 2 est réfléchie, parce que demeure un dioptre entre du verre et de l'air qui ont des indices de réfraction différents. Mais comme l'angle d'incidence du rayon émis par le laser est différent de 90°, l'angle de réflexion est égal, ce qui signifie que le faisceau réfléchi n'emprunte par le même trajet que le faisceau incident, et ne revient pas sur la photodiode 3. L'orientation donnée au faisceau réfléchi par la présence du prisme 5 fait que ce faisceau réfléchi ne peut pas revenir sur la lame séparatrice 41.

Il est préférable d'absorber le faisceau réfléchi sur le dioptre 6 du prisme 5 par tout moyen convenable représenté par un piège absorbant 8. Sans cette précaution, le faisceau réfléchi une première fois sur le dioptre 6 peut se réfléchir d'autres fois sur le boîtier du coupleur, ou sur les faces 'de composants voisins d'un circuit hybride et finalement tomber sur la photodiode 3.

De façon analogue, une partie du faisceau lumineux émis par le laser 2 est réfléchie par le dioptre d'entrée de la lame séparatrice 41 : il est préférable d'absorber ce faisceau réfléchi par un piège absorbant 9.

L'invention a été décrite en s'appuyant sur l'exemple d'un coupleur qui comprend un laser et une lentille à gradient d'indice. L'invention reste valable si le laser est remplacé par une diode électroluminescente et si la lentille est de type plan-convexe, le prisme 5 étant accolé au plan. Toutefois, l'expérience montre que les lentilles à gradient d'indice, qui ont deux faces planes à leurs extrémités, sont plus efficaces.

L'invention permet d'augmenter de 50 % l'isolation optique d'un coupleur, qui passe de 20 dB sans prisme à 30 dB avec prisme.

Elle est appliquée aux échanges de données par voie optoélectronique.

## Revendications

**1** **-** Coupleur optique à haute isolation, comportant un dispositif émetteur (2) d'un rayonnement lumineux focalisé par une lentille (30) sur une fibre optique (1), et un dispositif récepteur (3) d'un rayonnement lumineux transmis par la dite fibre optique (1) et réfléchi vers le dispositif récepteur (3) par une lame séparatrice (41), ce coupleur optique étant caractérisé en ce qu'il comporte des moyens (5) de déviation des rayons lumineux, de sorte que l'axe optique du dispositif émetteur (2) est dévié par rapport à l'axe optique de la fibre optique (1) et de la lentille de focalisation (30).

**2** **-** Coupleur optique selon la revendication 1, caractérisé en ce que les dits moyens de déviation sont un prisme (5), dont une première face est accolée au dioptre (4) d'entrée de la lentille de focalisation (30) et dont une deuxième face forme un dioptre (6) avec l'air.

**3** **-** Coupleur optique selon la revendication 2, caractérisé en ce que les rayons lumineux émis par le dispositif émetteur (2) traversent la lame séparatrice (41) et tombent sur le dioptre (6) de la deuxième face du prisme (5) sous un angle différent de 90°, et en ce que la partie réfléchie de ces rayons lumineux ont un trajet optique différent de celui des rayons incidents, et ne reviennent pas sur la lame séparatrice (41).

**4** **-** Coupleur optique selon la revendication 2, caractérisé en ce que le prisme (5) a un angle compris entre 10 et 20 °, et est taillé dans un matériau transparent dont l'indice de réfraction est égal à celui de la lentille de focalisation (30) dans la région de son axe optique

**5** **-** Coupleur optique selon la revendication 2, caractérisé en ce que la lentille de focalisation (30) est de préférence une lentille à gradient d'indice, dont les deux extrêmités, sont des dioptres plans (4, 7)

**6** **-** Coupleur optique selon la revendication 5, caractérisé en ce que le prisme (5) est accolé au dioptre d'entrée (4) de la lentille de focalisation (30) au moyen d'un liquide de même indice de réfraction.

**7** **-** Coupleur optique selon la revendication 3, caractérisé en ce que la partie des rayons incidents qui est réfléchie par le dioptre (6) formé par le prisme (5) et l'air est absorbée par un piège (8).

**8** **-** Coupleur optique selon la revendication 3, caractérisé en ce que la partie des rayons incidents qui est réfléchie par la lame séparatrice (41) est absorbée par un piège (9).

**9** **-** Coupleur optique selon la revendication 1, caractérisé en ce que le dispositif émetteur est un laser semiconducteur, et le dispositif récepteur est une photodiode.
